(19) Europäisches Patentamt
European Patent Office
Office européen des brevets

(11) **EP 3 237 134 B1**

(12) **EUROPÄISCHE PATENTSCHRIFT**

(45) Veröffentlichungstag und Bekanntmachung des Hinweises auf die Patenterteilung:
**16.10.2019 Patentblatt 2019/42**

(21) Anmeldenummer: **17701832.2**

(22) Anmeldetag: **20.01.2017**

(51) Int Cl.:
*B23C 5/00* (2006.01)        *B23C 5/20* (2006.01)
*B23F 21/12* (2006.01)

(86) Internationale Anmeldenummer:
**PCT/EP2017/051193**

(87) Internationale Veröffentlichungsnummer:
**WO 2017/125553 (27.07.2017 Gazette 2017/30)**

(54) **FRÄSWERKZEUG**

MILLING TOOL

OUTIL DE FRAISAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.01.2016 DE 102016101145**

(43) Veröffentlichungstag der Anmeldung:
**01.11.2017 Patentblatt 2017/44**

(73) Patentinhaber: **Hartmetall-Werkzeugfabrik Paul Horn GmbH**
**72072 Tübingen (DE)**

(72) Erfinder:
• **ZANKL, Max**
**82281 Egenhofen (DE)**
• **HOSS, Johannes**
**72131 Ofterdingen (DE)**

(74) Vertreter: **Witte, Weller & Partner Patentanwälte mbB**
**Postfach 10 54 62**
**70047 Stuttgart (DE)**

(56) Entgegenhaltungen:
**EP-A2- 2 659 999        WO-A1-2012/052367**
**WO-A1-2015/034699      JP-A- 2013 202 767**

**Beschreibung**

Die vorliegende Erfindung betrifft ein Fräswerkzeug zur spanenden Bearbeitung eines Werkstücks gemäß dem Oberbegriff des Anspruchs 1. Ein solches Fräswerkzeug ist aus der WO 2015/03499 A1 bekannt. Die vorliegende Erfindung betrifft insbesondere ein Fräswerkzeug, welches für die Herstellung einer Zyklo-Palloid-Verzahnung geeignet ist.

Zyklo-Palloid-Verzahnungen werden häufig auch als Klingelnberg-Palloid-Verzahnungen bezeichnet. Derartige Verzahnungen kommen meist an Kegelrädern oder anderen Getriebeteilen vor. Im Vergleich zu Kegelrädern mit "regulären", geraden Verzahnungen zeichnen sich Kegelräder mit Zyklo-Palloid-Verzahnungen durch ihre größere Laufruhe, bessere Akustik, höhere Belastbarkeit sowie bessere Ausnutzung des Bauraums aus.

Die Zahnform einer Zyklo-Palloid-Verzahnung entspricht dem Abschnitt einer Spirale. Die Zähne weisen daher jeweils eine konvexe und eine konkave Flanke auf, wobei sich die Breite jedes Zahns entlang des Zahnkamms aufweitet. Das eine stirnseitige Ende jedes Zahns ist also aufgrund der spiralförmigen Aufweitung schmäler als das andere stirnseitige Ende des gleichen Zahns.

Die Herstellung solcher Zyklo-Palloid-Verzahnungen ist im Vergleich zu "regulären" Verzahnungen mit geraden Flanken geometrisch bedingt komplexer und damit meist aufwendiger. Üblicherweise werden Zyklo-Palloid-Verzahnungen mit Hilfe von extra dazu eingerichteten Verzahnungsmaschinen hergestellt. Aufgrund der hohen Anschaffungskosten solcher Verzahnungsmaschinen existiert jedoch vermehrt der Wunsch danach, auch solche geometrisch komplexen Verzahnungen mithilfe von universellen Fräsmaschinen herzustellen. Dies ist insbesondere interessant für Hersteller, die derartige Kegelräder, auch Hypoidkegelräder oder Spiralkegelräder genannt, in kleinen Serien herstellen, dafür solche Hersteller die Anschaffung einer extra Verzahnungsmaschine nur wenig lohnenswert erscheint.

Es gibt bereits Ansätze für die Konstruktion spezieller Fräswerkzeuge mittels deren sich oben genannte Verzahnungen auf CNC-Fräsmaschinen mit Fünfachstechnologie herstellen lassen. Die mit den bisher bekannten Lösungen solcher Spezialfräswerkzeuge erzielten Ergebnisse waren bisher aus qualitativer und wirtschaftlicher Sicht jedoch eher mäßig. Dies liegt insbesondere an der relativ hohen Bearbeitungszeit, welche dadurch zustande kommt, dass mit den bisherigen Fräswerkzeugen relativ viele Bearbeitungsschritte notwendig waren, um das am Werkstück herzustellende Zahnprofil auf dessen volle Tiefe zu fräsen. Aufgrund der relativ komplexen Geometrie der Verzahnung war es bisher beispielsweise nicht möglich, zumindest Teile des Verzahnungsprofils direkt in einem Bearbeitungsgang auf die volle Profiltiefe zu fräsen, da die Einstechtiefe geometriebedingt begrenzt ist, um Kollisionen zwischen Werkzeughalter und Werkstück zu vermeiden. Zudem ist häufig auch mehr als nur ein Werkzeug erforderlich, um das Zahnprofil einer Zyklo-Palloid-Verzahnung mittels Fräsen herzustellen.

Der vorliegenden Erfindung liegt daher die Aufgabe zugrunde, ein Fräswerkzeug zur spanenden Bearbeitung eines Werkstücks bereitzustellen, welches sich insbesondere zur Herstellung einer Zyklo-Palloid-Verzahnung eignet und dabei insbesondere im Bezug auf die Wirtschaftlichkeit des Werkzeugs im Vergleich zu den bisher bekannten Lösungen verbessert ist.

Diese Aufgabe wird durch ein Fräswerkzeug gemäß Anspruch 1 gelöst, mit:

- einem Halter, welcher bei einem Einsatz des Fräswerkzeugs um eine Mittelachse rotiert wird, wobei der Halter im Bereich seines hinteren Endes einen Einspannabschnitt zur Einspannung des Halters aufweist und im Bereich seines vorderen Endes einen im Vergleich zum Einspannabschnitt radial auskragenden Halterkopf aufweist, an dem mehrere, in Umfangsrichtung verteilt angeordnete, erste Schneidplattenaufnahmen vorgesehen sind, und

- mehreren ersten Schneidplatten, welche in den am Halter vorgesehenen ersten Schneidplattenaufnahmen befestigt sind, und zumindest bereichsweise radial nach außen über den Halterkopf abstehen, wobei die jeweils radial äußersten Punkte der ersten Schneidplatten auf einem gemeinsamen Kreis liegen, dessen Mittelpunkt auf der Mittelachse des Halters liegt,

wobei auf einer dem Einspannabschnitt zugewandten Oberseite des Halterkopfs mehrere erste Teilkegelflächen vorgesehen sind, die auf einem gemeinsamen, imaginären, ersten Hüllkegel liegen, dessen gedachte Spitze auf der Mittelachse des Halters liegt und dessen Mantellinie mit einer zur Mittelachse des Halters orthogonal ausgerichteten Orthogonalebene einen ersten Winkel $\alpha_1$ einschließt,
wobei auf einer vom Einspannabschnitt abgewandten Stirnseite des Halterkopfs, welche der Oberseite gegenüber liegt, mehrere zweite Teilkegelflächen vorgesehen sind, die auf einem gemeinsamen, imaginären, zweiten Hüllkegel liegen, dessen gedachte Spitze auf der Mittelachse des Halters liegt und dessen Mantellinie mit der Orthogonalebene einen zweiten Winkel $\alpha_2$ einschließt,
wobei die ersten Schneidplattenaufnahmen jeweils eine erste Anlagefläche zur Anlage der ersten Schneidplatten am Halter haben, wobei die erste Anlagefläche zwischen der Oberseite und der Stirnseite des Halterkopfs angeordnet ist und mit der Orthogonalebene einen dritten Winkel $\alpha_3$ einschließt,
wobei die Mantellinie des ersten Hüllkegels mit der Mantellinie des zweiten Hüllkegels einen vierten Winkel $\alpha_4$ einschließt,
wobei ferner gilt: (i) $\alpha_1 > \alpha_3 \geq \alpha_2$ und (ii) $\alpha_4 \leq \alpha_1$, und wobei am Halter ferner mehrere, in Umfangsrichtung verteilt angeordnete, zweite und dritte Schneidplattenaufnahmen vorgesehen sind, wobei in den zweiten Schneidplattenaufnahmen jeweils eine zweite Schneidplatte befestigt ist, und in den dritten Schneidplattenaufnahmen jeweils eine dritte Schneidplatte befestigt ist, wobei die zweiten Schneidplattenaufnahmen, in Umfangsrichtung des Halters betrachtet, jeweils zwischen einer ersten Schneidplattenaufnahme und einer dritten Schneidplattenaufnahme angeordnet sind, und wobei sich die zweiten und dritten Schneidplatten von den ersten Schneidplatten unterscheiden.

Das erfindungsgemäße Fräswerkzeug zeichnet sich insbesondere durch die oben beschriebenen geometrischen Eigenschaften des Halterkopfs sowie die Anordnung der ersten Schneidplatten am Halter bzw. Halterkopf aus.

Wie oben bereits beschrieben, sind auf der Oberseite des Halterkopfs mehrere erste Teilkegelflächen sowie auf der gegenüberliegenden Unter- bzw. Stirnseite des Halterkopfs mehrere zweite Teilkegelflächen vorgesehen. Die an der Oberseite des Halterkopfs vorgesehenen ersten Teilkegelflächen liegen auf einem gemeinsamen, imaginären, ersten Hüllkegel, welcher rotationssymmetrisch zur Mittelachse des Halters ist. Die auf der Stirnseite des Halterkopfs angeordneten zweiten Teilkegelflächen liegen auf einem gemeinsamen, imaginären, zweiten Hüllkegel, welcher ebenfalls rotationssymmetrisch zur Mittelachse des Halters ist. Dabei sei angemerkt, dass die gedachten Hüllkegel, jedoch nicht notwendigerweise die Teilkegelflächen selbst, rotationssymmetrisch zur Mittelachse des Halters sind.

Der Winkel, welchen die Mantellinie des ersten Hüllkegels mit einer zur Mittelachse des Halters orthogonal ausgerichteten Orthogonalebene einschließt (vorliegend bezeichnet als Winkel $\alpha_1$) ist größer ausgeführt als der Winkel, den die Mantellinie des zweiten Hüllkegels mit der Orthogonalebene einschließt (vorliegend bezeichnet als Winkel $\alpha_2$). Der Winkel, den die Mantellinien der beiden Hüllkegel miteinander einschließen (vorliegend bezeichnet als Winkel $\alpha_4$), ist allerdings kleiner als der Winkel $\alpha_1$.

Eine weitere Besonderheit des erfindungsgemäßen Fräswerkzeug liegt in der "gekippten" Anordnung der ersten Schneidplatten am Halter bzw. Halterkopf. Die ersten Anlageflächen, an denen die ersten Schneidplatten am Halter anliegen, sind ebenfalls unter einem Winkel zur Orthogonalebene geneigt. Dieser Winkel wird vorliegend als dritter Winkel $\alpha_3$ bezeichnet, wobei gilt $\alpha_1 > \alpha_3 \geq \alpha_2$. Der Neigungswinkel der ersten Anlageflächen ist also so gewählt, dass dieser betragsmäßig kleiner als der erste Winkel $\alpha_1$ (Winkel zwischen Mantellinie des ersten Hüllkegels und Orthogonalebene) ist, aber größer oder gleich groß ist wie der zweite Winkel $\alpha_2$ (Winkel zwischen der Mantellinie des zweiten Hüllkegels und der Orthogonalebene).

Die genannten geometrischen Verhältnisse führen dazu, dass die ersten Schneidplatten radial relativ weit nach außen über den Halterkopf abstehen können, ohne dass es bei der Bearbeitung des Werkstücks zu unerwünschten Kollisionen zwischen dem Halterkopf und dem Werkstück kommt. Dies liegt u.a. auch daran, dass die Form des Werkzeugkopfs zumindest zum Teil an die am Werkstück herzustellende Verzahnungskontur angepasst ist. Wie bereits erwähnt, hat jeder Zahn einer Zyklo-Palloid-Verzahnung eine konvexe und eine konkave Flanke. Die am Halterkopf vorgesehenen ersten und zweiten Teilkegelflächen ahmen diese Form etwas nach. Die geneigte Anordnung der ersten Schneidplatten wirkt sich diesbezüglich ebenfalls positiv aus.

Das weite, radiale Auskragen der ersten Schneidplatten ermöglicht es wiederum, das Verzahnungsprofil bereits im ersten Bearbeitungsgang auf die gesamte Profiltiefe (Zahnhöhe) zu fräsen. Dies wiederum führt zu einer enormen Zeitersparnis und damit auch zu einer erhöhten Wirtschaftlichkeit des erfindungsgemäßen Werkzeugs.

Im Übrigen hat sich das erfindungsgemäße Werkzeug durch seinen Aufbau bedingt auch als mechanisch sehr robust erwiesen. Zudem lässt sich die Bauweise mit den oben genannten Geometrieeigenschaften auch als durchaus kompakt bezeichnen.

Das erfindungsgemäße Werkzeug kann problemlos in universellen Fräsmaschinen, beispielsweise in Fünfachs-Bearbeitungszentren eingesetzt werden.

Gemäß einer bevorzugten Ausgestaltung ist die Differenz zwischen dem dritten Winkel $\alpha_3$ (Winkel zwischen erster Anlagefläche und Orthogonalebene) und dem zweiten Winkel $\alpha_2$ (Winkel zwischen Mantellinie des zweiten Hüllkegels und der Orthogonalebene) kleiner als 6°. Es ist nämlich insbesondere bevorzugt, dass die Hauptschneidkanten der ersten Schneidplatten zumindest näherungsweise parallel zu den Mantellinien des ersten bzw. zweiten Hüllkegels verlaufen. Aus fertigungstechnischen Gründen sollte sich daher der dritte Winkel $\alpha_3$ nicht all zu sehr von dem zweiten Winkel $\alpha_2$ unterscheiden, da es ansonsten zu einem erhöhten Schleifaufwand der Schneidkanten der ersten Schneidplatten käme.

Gemäß einer besonders bevorzugten Ausgestaltung ist der dritte Winkel $\alpha_3$ gleichgroß gewählt wie der zweite Winkel $\alpha_2$. Die ersten Anlageflächen der ersten Schneidplatten sind somit unter dem gleichen Winkel im Bezug zur Orthogonalebene geneigt wie die Mantellinie des zweiten Hüllkegels der an der Unter- bzw. Stirnseite des Halterkopfs angeordneten zweiten Teilkegelflächen.

Gemäß einer weiteren Ausgestaltung weisen die ersten Schneidplatten jeweils eine erste Hauptschneidkante und eine zweite Hauptschneidkante auf, welche untereinander einen fünften Winkel $\alpha_5$ einschließen, wobei gilt: $\alpha_5 \geq \alpha_4$. Wenn der Winkel $\alpha_5$ zwischen den beiden Hauptschneidkanten der ersten Schneidplatten größer ist als der Winkel $\alpha_4$ zwischen der Mantellinie des ersten Hüllkegels und der Mantellinie des zweiten Hüllkegels, so ist sichergestellt, dass der Halterkopf auch bei einer Bearbeitung von tieferen Verzahnungsprofilen freiläuft.

Gemäß einer besonders bevorzugten Ausgestaltung ist der fünfte Winkel $\alpha_5$ gleich groß wie der vierte Winkel $\alpha_4$. Dies ist aus geometrischer Sicht besonders bevorzugt, da die erste Hauptschneidkante der ersten Schneidplatten in diesem Fall jeweils parallel zur Mantellinie des ersten Hüllkegels verläuft und die zweite Hauptschneidkante der ersten Schneidplatten jeweils parallel zur Mantellinie des zweiten Hüllkegels verläuft. Die ersten Hauptschneidkanten verlaufen also, anders ausgedrückt, parallel zu den auf der Oberseite des Halterkopfs vorgesehenen ersten Teilkegelflächen und die zweiten Hauptschneidkanten verlaufen parallel zu den auf der Unter- bzw. Stirnseite des Halterkopfs vorgesehenen zweiten Teilkegelflächen.

Gemäß einer weiteren Ausgestaltung ist es bevorzugt, dass die ersten Hauptschneidkanten mit der Orthogonalebene einen sechsten Winkel $\alpha_6$ einschließen, welcher gleich groß ist wie der erste Winkel $\alpha_1$, und dass die zweiten Hauptschneidkanten mit der Orthogonalebene einen siebten Winkel $\alpha_7$ einschließen, welcher gleich groß ist wie der zweite Winkel $\alpha_2$.

Erfindungsgemäß sind am Halter mehrere, in Umfangsrichtung verteilt angeordnete, zweite und dritte Schneidplattenaufnahmen vorgesehen, wobei in den zweiten Schneidplattenaufnahmen jeweils eine zweite Schneidplatte befestigt ist und in den dritten Schneidplattenaufnahmen jeweils eine dritte Schneidplatte befestigt ist, wobei die zweiten Schneidplattenaufnahmen, in Umfangsrichtung des Halters betrachtet, jeweils zwischen einer ersten Schneidplattenaufnahme und einer dritten Schneidplattenaufnahme angeordnet sind, und wobei sich die zweiten und dritten Schneidplatten von den ersten Schneidplatten unterscheiden.

Vorzugsweise sind gleich viele erste Schneidplatten wie zweite und dritte Schneidplatten vorgesehen. Beispielsweise können drei erste Schneidplatten, drei zweite Schneidplatten und drei dritte Schneidplatten vorgesehen sein. Ebenso ist es möglich jeweils zwei, vier oder fünf der ersten, zweiten und dritten Schneidplatten vorzusehen. Dies hängt zum einen von der Größe des Fräskopfs und des zu erreichenden Verzahnungsprofils ab. Zum anderen hängt dies von den Erfordernissen an den Bearbeitungsprozess ab.

Unabhängig davon wie viele der ersten, zweiten und dritten Schneidplatten jeweils vorgesehen sind, sind diese vorzugsweise in Dreiergruppen am Halter angeordnet. Dies bedeutet, dass diese, in Umfangsrichtung betrachtet, jeweils abwechselnd angeordnet sind, wobei zwischen einer ersten und einer dritten Schneidplatte jeweils eine zweite Schneidplatte am Halter angeordnet ist und zwischen einer zweiten Schneidplatte und einer ersten Schneidplatte jeweils eine dritte Schneidplatte angeordnet ist. Dementsprechend ist auch, in Umfangsrichtung betrachtet, zwischen einer dritten und einer zweiten Schneidplatte jeweils eine erste Schneidplatte angeordnet.

Es versteht sich, dass die Begriffe "erste", "zweite", "dritte" Schneidplatte vorliegend nur zur Differenzierung der verschiedenen Arten von Schneidplatten verwendet wird. Dies soll weder eine Anzahl noch eine darüber hinausgehende strukturelle Bedeutung implizieren.

In der zuletzt genannten Ausgestaltung ist es besonders bevorzugt, wenn die zweiten Schneidplatten im Vergleich zu den dritten Schneidplatten geometrisch spiegelverkehrt ausgeführt sind. In diesem Fall spricht man dann von einer linken und einer rechten Schneidplatte.

Weiterhin ist es bevorzugt, dass die ersten und die zweiten Schneidplatten von der Stirnseite des Halterkopfs aus mit dem Halter verschraubt sind, und die dritten Schneidplatten von der Oberseite des Halterkopfs aus mit dem Halter verschraubt sind. Die dritten Schneidplatten sind damit also von der Oberseite des Halterkopfs aus zugänglich, wohingegen die ersten und zweiten Schneidplatten von der Unter- bzw. Stirnseite des Halterkopfs aus zugänglich sind. Dabei stehen vorzugsweise lediglich die ersten Schneidplatten radial nach außen vom Halterkopf ab.

Die ersten Schneidplatten übernehmen während der Bearbeitung die Funktion, den Profilgrund sowie die an den Profilgrund angrenzenden unteren Teile der Zahnflanken zu bearbeiten. Die zweiten und dritten Schneidplatten bearbeiten hingegen die oberen Teile der Zahnflanken. Während die ersten Schneidplatten sowohl bei der Bearbeitung der konvexen als auch bei der Bearbeitung der konkaven Flanken der Verzahnung zum Einsatz kommen, kommen die zweiten Schneidplatten nur bei der Bearbeitung der konvexen Zahnflanken und die dritten Schneidplatten nur bei der Bearbeitung der konkaven Zahnflanken zum Einsatz. Es versteht sich, dass beim erstem Einschnitt in das Werkstück zunächst alle drei Schneidplatten-Arten mit Werkstück in Eingriff kommen.

Insgesamt kommt es also bei der oben genannten Verwendung von drei verschiedenen Schneidplatten zu einer Schnittaufteilung während der Fräsbearbeitung. Dies führt zu einer reduzierten Leistungsaufnahme. Dadurch ist ein höherer Vorschub pro Schneide möglich und der Verschleiß reduziert.

In einer weiteren Ausgestaltung ist es bevorzugt, dass die zweiten Schneidplatten jeweils eine dritte Hauptschneidkanten aufweisen, welche mit der Orthogonalebene einen achten Winkel $\alpha_8$ einschließt, welcher gleich groß ist wie der zweite Winkel $\alpha_2$, und dass die dritten Schneidplatten jeweils eine vierte Hauptschneidkanten aufweisen, welche mit der Orthogonalebene einen neunten Winkel $\alpha_9$ einschließt, welcher gleich groß ist wie der erste Winkel $\alpha_1$. Dabei ist es besonders bevorzugt, dass der achte Winkel $\alpha_8$ gleich groß ist wie der siebte Winkel $\alpha_7$, und dass der neunte Winkel $\alpha_9$ gleich groß ist wie der sechste Winkel $\alpha_6$.

Die vierten Hauptschneidkanten der dritten Schneidplatten sind also vorzugsweise exakt parallel ausgerichtet zu den ersten Hauptschneidkanten der ersten Schneidplatten. Genauso sind die dritten Hauptschneidkanten der zweiten Schneidplatten vorzugsweise parallel zu den zweiten Schneidkanten der ersten Schneidplatten ausgerichtet. Besonders bevorzugt bewegen sich die vierten Hauptschneidkanten der dritten Schneidplatten während der Rotation des Werkzeugs um die Mittelachse auf einem gemeinsamen Hüllkegel, auf dem sich auch die ersten Hauptschneidkanten der ersten Schneidplatten während der Rotation des Werkzeugs bewegen. Genauso bewegen sich die dritten Hauptschneidkanten der zweiten Schneidplatte während der Rotation des Werkzeugs um die Mittelachse vorzugsweise auf dem gleichen Hüllkegel, auf dem sich auch die zweiten Hauptschneidkanten der ersten Schneidplatten während der Rotation des Werkzeugs bewegen.

Gemäß einer weiteren Ausgestaltung sind die ersten Schneidplatten mit Hilfe einer Schraube am Halter befestigt, wobei die Schrauben jeweils in ein Gewinde eingreifen, wobei die Gewinde jeweils orthogonal zu den ersten Anlageflächen in den Halterkopf eingebracht sind.

Weiterhin ist es bevorzugt, dass der Halter zumindest teilweise aus Stahl und die ersten Schneidplatten zumindest teilweise aus Hartmetall sind. Bei den Ausgestaltungen, bei denen drei verschiedene Schneidplatten eingesetzt werden, sind die zweiten und dritten Schneidplatten vorzugsweise ebenfalls zumindest teilweise aus Hartmetall. Auch diese werden dann vorzugsweise mit Hilfe von Schrauben am Halter einzeln befestigt.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein Ausführungsbeispiel des erfindungsgemäßen Fräswerkzeugs ist in den nachfolgenden Zeichnungen dargestellt und wird in der nachfolgenden Beschreibung näher erläutert. Es zeigen:

Fig. 1　　eine perspektivische Ansicht eines Ausführungsbeispiels des erfindungsgemäßen Fräswerkzeugs von schräg unten;

Fig. 2　　eine perspektivische Ansicht des in Fig. 1 gezeigten Ausführungsbeispiels des erfindungsgemäßen Fräswerkzeugs von schräg oben;

Fig. 3　　eine Draufsicht von unten auf das in Fig. 1 gezeigte Ausführungsbeispiel des erfindungsgemäßen Fräswerkzeugs;

Fig. 4　　eine erste Schnittansicht des in den Fig. 1-3 gezeigten Ausführungsbeispiels des erfindungsgemäßen Fräswerkzeugs;

Fig. 5　　eine zweite Schnittansicht des in den Fig. 1-3 gezeigten Ausführungsbeispiels des erfindungsgemäßen Fräswerkzeugs;

Fig. 6　　eine dritte Schnittansicht des in den Fig. 1-3 gezeigten Ausführungsbeispiels des erfindungsgemäßen Fräswerkzeugs;

Fig. 7a-7c　drei verschiedene Ansichten eines Ausführungsbeispiels einer in dem erfindungsgemäßen Fräswerkzeug verwendbaren ersten Schneidplatte;

Fig. 8a-8b　zwei Ansichten eines in dem erfindungsgemäßen Fräswerkzeug verwendbaren zweiten Schneideinsatzes; und

Fig. 9a-9b　zwei Ansichten eines in dem erfindungsgemäßen Werkzeug verwendbaren dritten Schneideinsatzes.

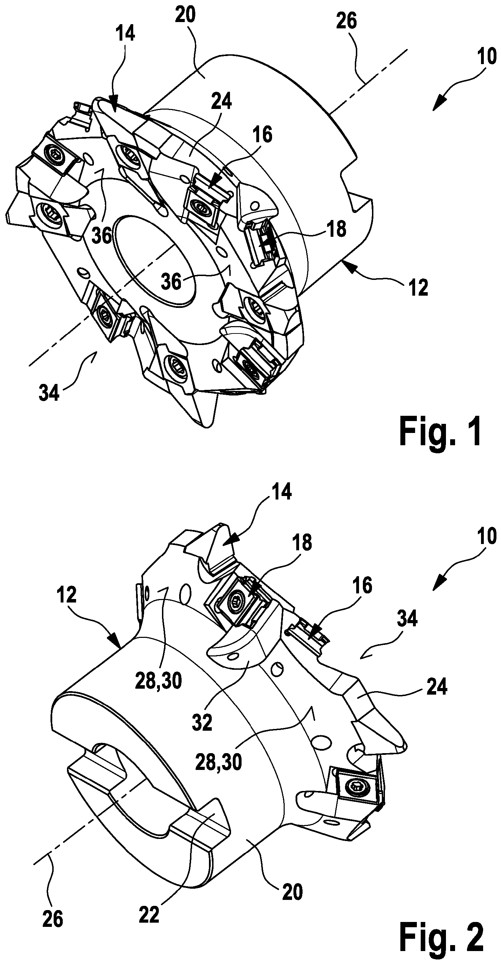

Die Fig. 1-3 zeigen ein Ausführungsbeispiel des erfindungsgemäßen Fräswerkzeugs in einer perspektivischen Ansicht von schräg unten, einer perspektivischen Ansicht von schräg oben, sowie in einer Draufsicht von unten. Das erfindungsgemäße Fräswerkzeug ist darin in seiner Gesamtheit mit der Bezugsziffer 10 bezeichnet.

Das Fräswerkzeug weist einen Halter 12 sowie mehrere daran befestigte Schneidplatten 14, 16, 18 auf.

Der Halter 12 weist im Bereich seines hinteren Endes einen Einspannabschnitt 20 auf, mittels dessen der Halter 12 an einer Werkzeugmaschine oder einem Verlängerungsschaft eingespannt werden kann. Der Einspannabschnitt 20 hat üblicherweise eine im Wesentlichen zylindrische Form und besitzt stirnseitig eine Werkzeugschnittstelle 22. Am gegenüberliegenden vorderen Ende des Halters 12 weist der Halter 12 einen Halterkopf 24 auf, welcher im Vergleich zum Einspannabschnitt 20 radial auskragt.

Während der Bearbeitung wird das Fräswerkzeug 10 um seine Mittelachse 26 rotiert. Bei dieser Rotation kommen die Schneidplatten 14, 16, 18 nacheinander in Eingriff mit dem Werkstück, um dieses spanend zu bearbeiten.

Bei dem in den Fig. 1-3 gezeigten Ausführungsbeispiel weist das Fräswerkzeug 10 drei unterschiedlich ausgestaltete Schneidplatten 14, 16, 18 auf, welche am Halterkopf 24 in entsprechend dafür vorgesehenen Schneidplattenaufnahmen befestigt sind. Bei den Schneidplatten 14, 16, 18 handelt es sich vorzugsweise um Wendeschneidplatten aus Hartmetall.

Es sei jedoch angemerkt, dass erfindungsgemäß lediglich die ersten Schneidplatten 14 obligatorisch sind, wohingegen die zweiten Schneidplatten 16 und die Schneidplatten 18 optional verwendbar sind. Grundsätzlich wäre daher auch ein Ausführungsbeispiel denkbar, bei dem lediglich mehrere erste Schneidplatten 14 verwendet werden. Es versteht sich, dass in diesem Fall die Schneidplattenaufnahmen für die zweiten und dritten Schneidplatten entfallen würden.

Ebenso sei angemerkt, dass das erfindungsgemäße Werkzeug 10 nicht auf die in den Fig. 1-3 gezeigte Anzahl von Schneidplatten 14, 16, 18 (hier vier pro Schneidplatten-Art) begrenzt ist. Grundsätzlich wäre es auch denkbar, das erfindungsgemäße Fräswerkzeug 10 bei Erhaltung des nachfolgend vorgestellten erfinderischen Prinzips mit 2, 3, 5 oder mehr Schneidplatten pro Schneidplatten-Art auszustatten.

Wesentliche Merkmale des erfindungsgemäßen Fräswerkzeugs 10 betreffen die Form des Halterkopfs 24 sowie die "gekippte" Anordnung der ersten Schneidplatten 14 am Halterkopf 24.

Der Halterkopf 24 weist auf seiner dem Einspannabschnitt 20 zugewandten Oberseite 28 mehrere erste Teilkegelflächen 30 auf, die auf einem gemeinsamen, imaginären, Hüllkegel liegen, welcher vorliegend als erster Hüllkegel bezeichnet wird. Wie insbesondere in Fig. 2 ersichtlich ist, sind diese ersten Teilkegelflächen 30 im Wesentlichen durch Aussparungen 32 und Schneideinsatzaufnahmen für die dritten Schneidplatten 18 voneinander getrennt. Sie liegen jedoch, wie bereits erwähnt, alle auf einem gemeinsamen Hüllkegel und werden daher als Teilkegelflächen bezeichnet.

In ähnlicher Weise weist der Halterkopf 24 auch auf seiner Unter- bzw. Stirnseite 34 mehrere, in Umfangsrichtung verteilt angeordnete Teilkegelflächen 36 auf, welche vorliegend als zweite Teilkegelflächen bezeichnet werden. Auch diese zweiten Teilkegelflächen 36 liegen allesamt auf einem gemeinsamen, imaginären Hüllkegel, welcher vorliegend als zweiter Hüllkegel bezeichnet wird. Eine gedachte Spitze des ersten Hüllkegels liegt genauso wie eine gedachte Spitze des zweiten Hüllkegels auf der Mittelachse des Halters 12.

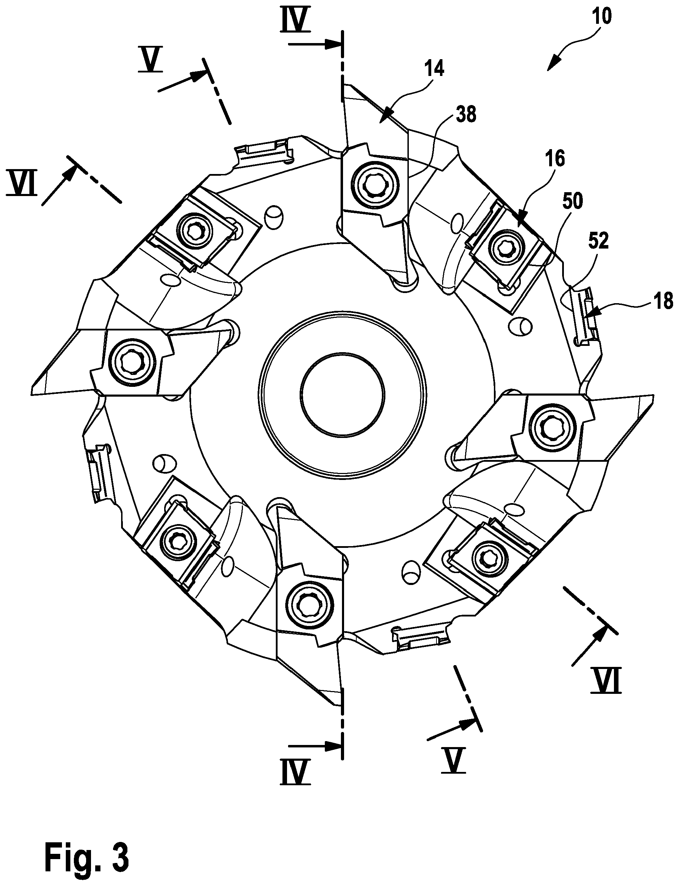

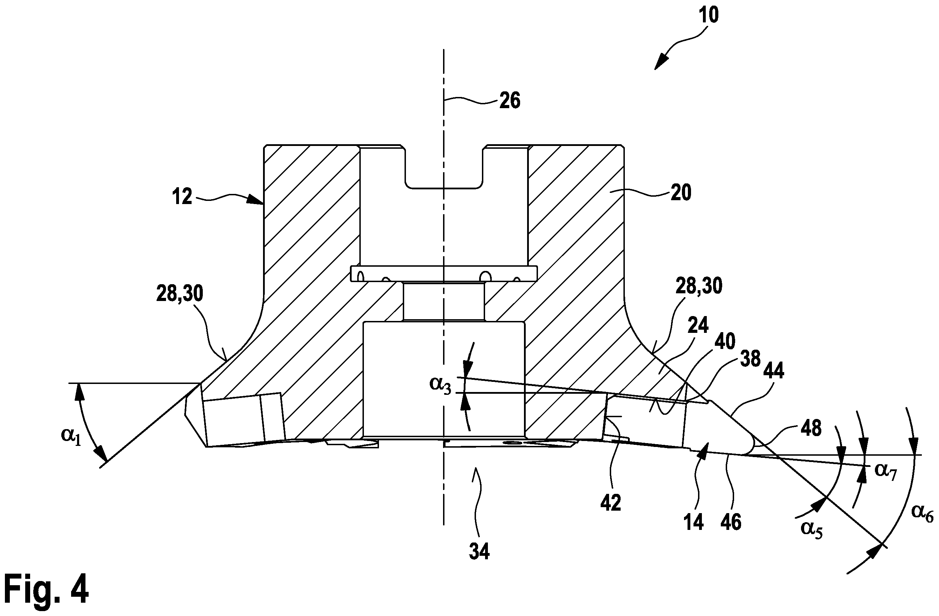

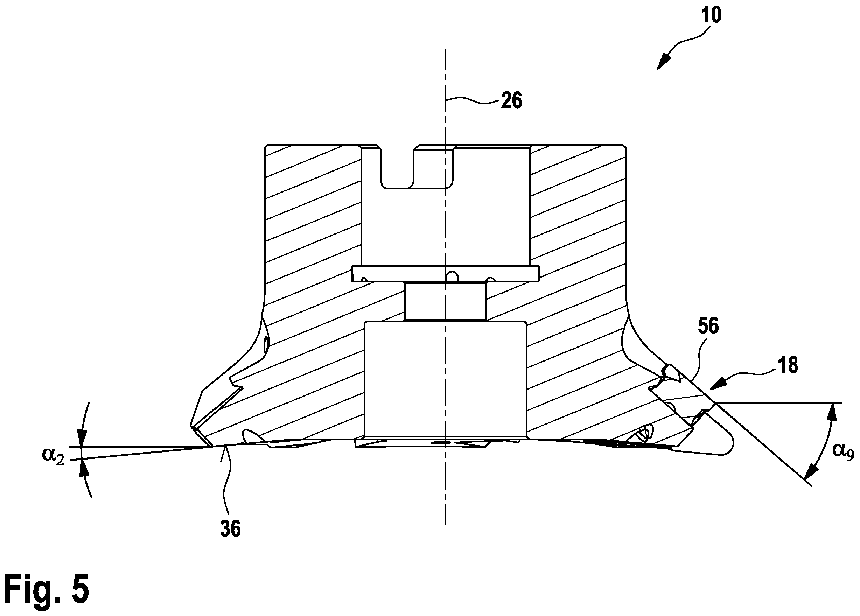

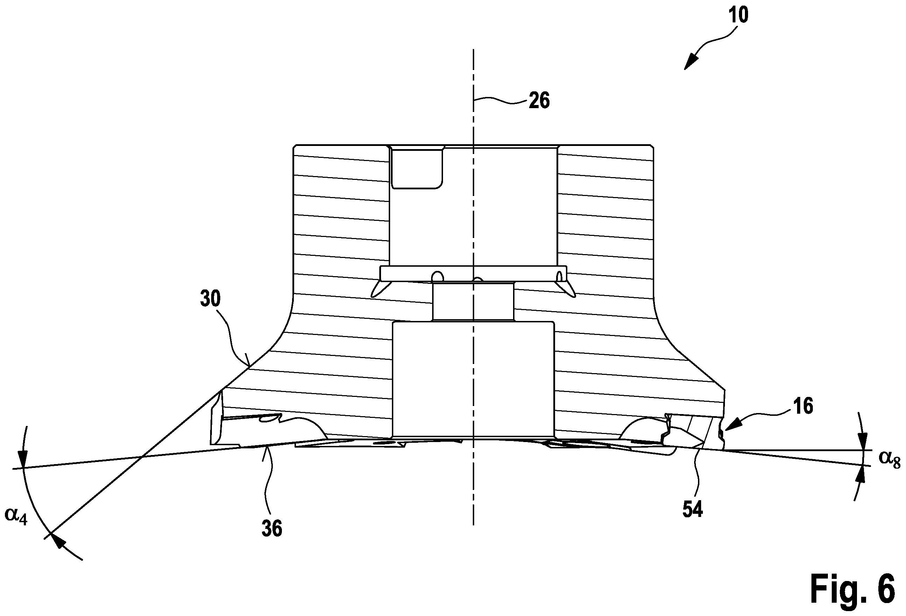

Die Fig. 4-6 zeigen mehrere Schnittansichten des in den Fig. 1-3 gezeigten Ausführungsbeispiels des erfindungsgemäßen Werkzeugs 10. Fig. 4 zeigt den in Fig. 3 angedeuteten Schnitt IV. Fig. 5 zeigt den in Fig. 3 angedeuteten Schnitt V. Fig. 6 zeigt den in Fig. 3 angedeuteten Schnitt VI.

In den in den Fig. 4-6 dargestellten Schnittansichten sind mehrere Winkel $\alpha_1$-$\alpha_9$ dargestellt, um die geometrische Lage im Raum der einzelnen Elemente am Halter 12 sowie an den Schneidplatten 14, 16, 18 zu verdeutlichen.

Der erste Winkel $\alpha_1$ (siehe Fig. 4) bezeichnet den Winkel zwischen der Mantellinie des ersten Hüllkegels (der ersten Teilkegelflächen 30) und einer Orthogonalebene, welche orthogonal zur Mittelachse 26 des Halters 12 ausgerichtet ist.

Der zweite Winkel $\alpha_2$ (siehe Fig. 5) bezeichnet den Winkel zwischen der Mantellinie des zweiten Hüllkegels (der zweiten Teilkegelflächen 36) und der Orthogonalebene.

Der dritte Winkel $\alpha_3$ (siehe Fig. 4) bezeichnet den Winkel, um den die ersten Schneidplatten 14 in ihren Halterungen am Halter 12 gegenüber der Orthogonalebene geneigt sind. Die ersten Schneidplatten 14 sind jeweils in Aufnahmen 38 am Halter 12 angeordnet, welche vorliegend als erste Schneidplattenaufnahmen 38 bezeichnet werden. Diese ersten Schneidplattenaufnahmen 38 weisen jeweils eine erste Anlagefläche 40 sowie eine zweite Anlagefläche 42 auf. Der Winkel $\alpha_3$ bezeichnet also den Winkel zwischen den ersten Anlageflächen 40 und der Orthogonalebene (siehe Fig. 4).

Zur Befestigung der ersten Schneidplatten 14 am Halter 12 ist in jeder ersten Schneidplattenaufnahme 38 vorzugsweise ein Gewinde vorgesehen, welches orthogonal zu den ersten Anlageflächen 40 in den Halterkopf 24 eingebracht ist. Die ersten Schneidplatten 14 können daher mit Hilfe von Schrauben befestigt werden, welche in diese Gewinde eingreifen.

Der vierte Winkel $\alpha_4$ (siehe Fig. 6) bezeichnet den Winkel zwischen der Mantellinie des ersten Hüllkegels (der ersten Teilkegelflächen 30) und der Mantellinie des zweiten Hüllkegels (der zweiten Teilkegelflächen 36). Der vierte Winkel $\alpha_4$ entspricht somit der Differenz zwischen erstem Winkel $\alpha_1$ und zweitem Winkel $\alpha_2$, wobei jeweils nur mit positiven Winkeln gerechnet wird. Da der zweite Winkel $\alpha_2$ vorzugsweise größer als 0° ist, gilt also grundsätzlich $\alpha_4 \leq \alpha_1$.

Eine für das erfindungsgemäße Werkzeug 10 weiterhin wesentliche geometrische Beziehung zwischen den o.g. Winkeln ist: $\alpha_1 > \alpha_3 \geq \alpha_2$. Der Winkel $\alpha_3$ unter dem die ersten Anlageflächen 40 relativ zur Orthogonalebene geneigt sind, ist mit anderen Worten also kleiner als die Neigung der auf der Oberseite 28 des Halterkopfs 24 angeordneten ersten Teilkegelflächen 30, jedoch größer oder gleich wie die Neigung der auf der Unter- bzw. Stirnseite 34 des Halterkopfs 24 angeordneten zweiten Teilkegelflächen 36.

Der dritte Winkel $\alpha_3$ sollte allerdings nur geringfügig von dem zweiten Winkel $\alpha_2$ abweichen, um die geometrischen Besonderheiten des erfindungsgemäßen Werkzeugs 10 bewahren zu können. Es ist daher bevorzugt, dass die Differenz zwischen dem dritten Winkel $\alpha_3$ und dem zweiten Winkel $\alpha_2$ kleiner als 6° ist. Besonders bevorzugt ist es, dass der dritte Winkel $\alpha_3$ gleich groß ist wie der zweite Winkel $\alpha_2$.

Wie in Fig. 4 ferner ersichtlich ist, weisen die ersten Schneidplatten 14 jeweils eine erste Hauptschneidkanten 44 und eine zweite Hauptschneidkanten 46 auf. An dem in Radialrichtung des Werkzeugs 10 betrachtet äußersten Ende der ersten Schneidplatten 14 ist ein Radius 48 vorgesehen, welcher die beiden Hauptschneidkanten 44, 46 miteinander verbindet. Dieser Radius 48 fungiert ebenfalls als Schneide, welche während des Einsatzes des Fräswerkzeugs 10 den Profilgrund bearbeitet.

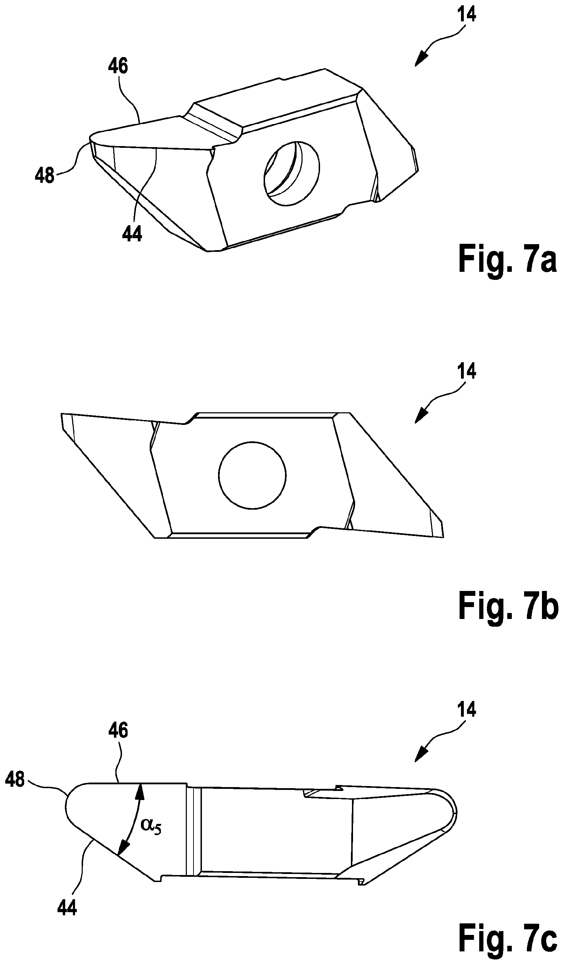

Ein Ausführungsbeispiel der ersten Schneidplatten 14 ist im Detail in drei verschiedenen Ansichten in den Fig. 7a-7c dargestellt. Bei den ersten Schneidplatten 14 handelt es sich vorzugsweise um sogenannte Zweischneider, welche in zwei unterschiedlichen Positionen am Halter 12 befestigt werden können. Bei Verschleiß einer Schneidkante kann die Schneidplatte 14 somit zumindest einmal gewendet werden.

Der fünfte Winkel $\alpha_5$ (siehe Fig. 4 und 7c) bezeichnet den Winkel, welche die ersten und zweiten Hauptschneidkanten 44, 46 der ersten Schneidplatten 14 untereinander einschließen. Dieser fünfte Winkel $\alpha_5$ ist vorzugsweise größer oder gleich groß wie der vierte Winkel $\alpha_4$. Sofern der fünfte Winkel $\alpha_5$ gleich groß ist wie der vierte Winkel $\alpha_4$, verlaufen die ersten Hauptschneidkanten 44 parallel zur Mantellinie des ersten Hüllkegels (der ersten Teilkegelflächen 30). Ebenso verlaufen dann die zweiten Hauptschneidkanten 46 parallel zu der Mantellinie des zweiten Hüllkegels (der zweiten Teilkegelflächen 36).

Der sechste Winkel $\alpha_6$ (siehe Fig. 4) bezeichnet den Winkel, welchen die ersten Hauptschneidkanten 44 mit der Orthogonalebene einschließen. Der sechste Winkel $\alpha_6$ ist vorzugsweise gleich groß wie der erste Winkel $\alpha_1$.

Der siebte Winkel $\alpha_7$ (siehe Fig. 4) bezeichnet den Winkel, welchen die zweiten Hauptschneidkanten 46 mit der Orthogonalebene einschließen. Der siebte Winkel $\alpha_7$ ist vorzugsweise gleich groß wie der zweite Winkel $\alpha_2$.

Aufgrund der am Halterkopf 24 angeordneten ersten und zweiten Teilkegelflächen 30, 36 sowie der geneigten Lage der ersten Anlageflächen 40 und der zwischen diesen Flächen bestehenden, oben beschriebenen Winkelbeziehungen können die ersten Schneidplatten 14 relativ weit radial nach außen auskragen, ohne dass es bei der Fräsbearbeitung, insbesondere bei der Herstellung von Zyklo-Palloid-Verzahnungen, zu Kollisionen zwischen dem Werkstück und dem Halter 12 kommt. Somit ist es möglich, direkt beim ersten Bearbeitungsdurchgang auf die volle Tiefe des Verzahnungsprofils zu fräsen. Dies führt zu einer enormen Zeitersparnis.

Um die Bearbeitungsqualität und Bearbeitungsgeschwindigkeit zu erhöhen, kommen bei dem erfindungsgemäßen Werkzeug 10 zusätzlich zu den ersten Schneidplatten 14 weitere Schneidplatten 16 und 18 zum Einsatz.

Die zweiten und dritten Schneidplatten 16 und 18 unterscheiden sich geometrisch von den ersten Schneidplatten 14. Die zweiten Schneidplatten 16 sind vorzugsweise spiegelverkehrt zu den dritten Schneidplatten 18 ausgestaltet. Es handelt sich dabei also um linke und rechte Schneidplatten.

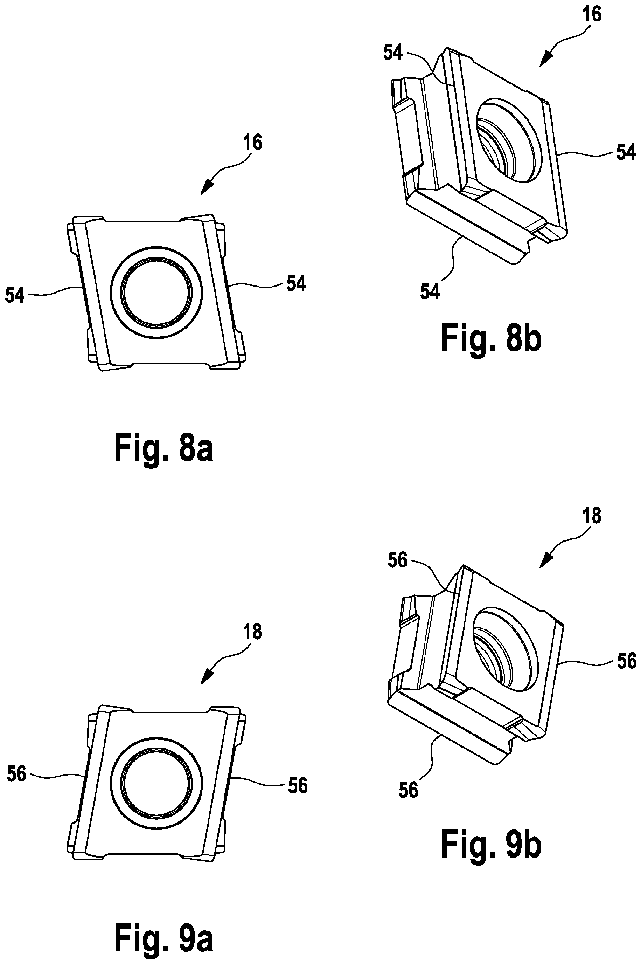

Ein Ausführungsbeispiel der zweiten und dritten Schneidplatten 16, 18 ist im Detail jeweils in einer perspektivischen Ansicht und einer Draufsicht in den Fig. 8a, 8b sowie 9a, 9b gezeigt. Wie aus den in Fig. 8a und 9a dargestellten Draufsichten erkennbar ist, weisen die zweiten und dritten Schneidplatten 16, 18 in der Draufsicht eine im Wesentlichen rhombische Form auf. Die zweiten und dritten Schneidplatten 16, 18 sind vorzugsweise als Wendeschneidplatten ausgeführt mit vier gleichen Schneidkanten 54 bzw. 56, so dass diese in vier verschiedenen Positionen im Halter einsetzbar sind. Die Schneidkanten 54 der zweiten Schneidplatten 16 werden vorliegend als dritte Hauptschneidkanten bezeichnet und die Schneidkanten 56 der dritten Schneidplatten 18 werden vorliegend als vierte Hauptschneidkanten bezeichnet. Details zu dieser Arten von Wendeschneidplatten sind der DE 10 2012 108 752 B3 zu entnehmen.

Wie insbesondere aus dem Vergleich von Fig. 1 und Fig. 2 ersichtlich ist, werden die ersten und zweiten Schneidplatten bei dem gezeigten Ausführungsbeispiel des erfindungsgemäßen Werkzeugs 10 von der Stirnseite 34 des Haltekopfs 24 aus mit dem Halter 12 verschraubt. Die dritten Schneidplatten werden dagegen von der Oberseite 28 des Halterkopfs 24 aus mit dem Halter 12 verschraubt.

Wie bereits erwähnt, ist zwischen einer ersten Schneidplatte 14 und einer zweiten Schneidplatte 16 in Umfangsrichtung betrachtet jeweils eine dritte Schneidplatte 18 am Halter 12 angeordnet. Die zweiten Schneidplatten 16 sind jeweils in einer, auf der Unterseite des Halterkopfs 24 vorgesehenen zweiten Schneidplattenaufnahme 50 befestigt (siehe Fig. 3). Die dritten Schneidplatten 18 sind jeweils in einer, auf der Oberseite 28 des Halterkopfs 24 angeordneten dritten Schneidplattenaufnahme 52 befestigt.

Die Anordnung der zweiten und dritten Schneidplatten 16, 18 erfolgt vorzugsweise derart, dass sich die zum Einsatz kommenden dritten Hauptschneidkanten 54 der zweiten Schneidplatten 16 während der Rotation des Fräswerkzeugs 10 um die Mittelachse 26 auf einer gemeinsamen Hüllkurve bewegen, welche auf dem zweiten, imaginären Hüllkegel liegt, auf dem auch die zweiten Teilkegelflächen 36 liegen. Ebenso ist es bevorzugt, dass sich die in Einsatz befindenden vierten Hauptschneidkanten 56 der dritten Schneidplatten 18 während der Rotation des Fräswerkzeugs 10 um die Mittelachse 26 auf einer Hüllkurve bewegen, welche auf dem ersten imaginären Hüllkegel liegt, auf dem auch die ersten Teilkegelflächen 30 liegen. Hierzu sind die zweiten Schneidplatten 16 derart am Halter 12 angeordnet, dass die zum Einsatz kommenden dritten Hauptschneidkanten 54 mit der Orthogonalebene einen achten Winkel $\alpha_8$ einschließen (siehe Fig. 6), welcher gleich groß ist wie der zweite Winkel $\alpha_2$. Vorzugsweise ist dieser achte Winkel $\alpha_8$ auch gleich groß wie der siebte Winkel $\alpha_7$. In ähnlicher Weise sind die dritten Schneidplatten 18 derart am Halter 12 angeordnet, dass die zum Einsatz kommenden vierten Hauptschneidkanten 56 mit der Orthogonalebene einen neunten Winkel $\alpha_9$ einschließen (siehe Fig. 5), welcher gleich groß ist wie der erste Winkel $\alpha_1$. Vorzugsweise ist der neunte Winkel $\alpha_9$ auch gleich groß wie der sechste Winkel $\alpha_6$.

Eine in der oben beschriebenen Weise ausgeführte Anordnung der ersten, zweiten und dritten Schneidplatten 14, 16, 18 ermöglicht es, eine der beiden Flanken einer Zyklo-Palloid-Verzahnung mit den ersten und vierten Hauptschneidkanten 44, 56 zu bearbeiten und die jeweils gegenüberliegende Flanke der Verzahnung mit den zweiten und dritten Hauptschneidkanten 46, 54 zu bearbeiten. Die ersten Schneidplatten 14 fräsen dabei jeweils den Zahngrund sowie die unteren beiden Teile der gegenüberliegenden Zahnflanken. Die zweiten und dritten Schneidplatten 16, 18 fräsen die daran anschließenden, oberen Teile der gegenüberliegenden Zahnflanken der Verzahnung.

Insgesamt bietet das erfindungsgemäße Fräswerkzeug 10 somit die Möglichkeit, eine Zyklo-Palloid-Verzahnung mittels Fräsbearbeitung auf vergleichsweise wirtschaftliche Art und Weise mit vergleichsweise hoher Qualität herzustellen. Insbesondere ist es dabei möglich, das gesamte Profil der Zyklo-Palloid-Verzahnung mit ein und demselben Werkzeug zu fräsen. Grundsätzlich können auch andere Palloid-Verzahnung mit dem erfindungsgemäßen Werkzeug hergestellt werden. In der Praxis wird das Werkzeug lediglich zum Schruppen verwendet und das Werkstück nachfolgend mit einem Schlichtwerkzeug nachbearbeitet. Die oben beschriebenen Geometrieeigenschaften des erfindungsgemäßen Fräswerkzeugs 10 ermöglichen bereits beim ersten Schnitt die Zustellung des Werkzeugs auf die volle Profiltiefe, ohne dass es zu unerwünschten Kollisionen kommt. Die optionale Verwendung der zweiten und dritten Schneidplatten ermöglicht eine optimale Schnittaufteilung, wodurch höhere Vorschübe möglich sind.

Abschließend sei darauf hingewiesen, dass grundsätzlich auch anders ausgestaltete Schneidplatten als die vorliegend gezeigten verwendet werden könne, ohne den Rahmen der Erfindung zu verlassen.

**Patentansprüche**

1. Fräswerkzeug (10) zur spanenden Bearbeitung eines Werkstücks, mit:

    - einem Halter (12), welcher bei einem Einsatz des Fräswerkzeugs um eine Mittelachse (26) rotiert wird, wobei der Halter (12) im Bereich seines hinteren Endes einen Einspannabschnitt (20) zur Einspannung des Halters (12) aufweist und im Bereich seines vorderen Endes einen im Vergleich zum Einspannabschnitt (20) radial auskragenden Halterkopf (24) aufweist, an dem mehrere, in Umfangsrichtung verteilt angeordnete, erste Schneidplattenaufnahmen (38) vorgesehen sind, und

    - mehreren ersten Schneidplatten (14), welche in den am Halter (12) vorgesehenen ersten Schneidplattenaufnahmen (38) befestigt sind, und zumindest bereichsweise radial nach außen über den Halterkopf (24) abstehen, wobei die jeweils radial äußersten Punkte der ersten Schneidplatten (14) auf einem gemeinsamen Kreis liegen, dessen Mittelpunkt auf der Mittelachse (26) des Halters (12) liegt,

    wobei auf einer dem Einspannabschnitt (20) zugewandten Oberseite (28) des Halterkopfs (24) mehrere erste Teilkegelflächen (30) vorgesehen sind, die auf einem gemeinsamen, imaginären, ersten Hüllkegel liegen, dessen gedachte Spitze auf der Mittelachse (26) des Halters (12) liegt und dessen Mantellinie mit einer zur Mittelachse des Halters orthogonal ausgerichteten Orthogonalebene einen ersten Winkel $\alpha_1$ einschließt,

    wobei auf einer vom Einspannabschnitt (20) abgewandten Stirnseite (34) des Halterkopfs, welche der Oberseite (28) gegenüber liegt, mehrere zweite Teilkegelflächen (36) vorgesehen sind, die auf einem gemeinsamen, imaginären, zweiten Hüllkegel liegen, dessen gedachte Spitze auf der Mittelachse (26) des Halters (12) liegt und dessen Mantellinie mit der Orthogonalebene einen zweiten Winkel $\alpha_2$ einschließt,

    wobei die ersten Schneidplattenaufnahmen (38) jeweils eine erste Anlagefläche (40) zur Anlage der ersten Schneidplatten (14) am Halter (12) haben, wobei die erste Anlageflächen (40) zwischen der Oberseite (28) und der Stirnseite (34) des Halterkopfs (24) angeordnet sind und mit der Orthogonalebene einen dritten Winkel $\alpha_3$ einschließt,

    wobei die Mantellinie des ersten Hüllkegels mit der Mantellinie des zweiten Hüllkegels einen vierten Winkel $\alpha_4$ einschließt, und

    wobei gilt: (i) $\alpha_1 > \alpha_3 \geq \alpha_2$ und (ii) $\alpha_4 \leq \alpha_1$,

    **dadurch gekennzeichnet, dass** am Halter (12) ferner mehrere, in Umfangsrichtung verteilt angeordnete, zweite und dritte Schneidplattenaufnahmen (50, 52) vorgesehen sind, wobei in den zweiten Schneidplattenaufnahmen (50) jeweils eine zweite Schneidplatte (16) befestigt ist, und in den dritten Schneidplattenaufnahmen (52) jeweils eine dritte Schneidplatte (18) befestigt ist, wobei die zweiten Schneidplattenaufnahmen (50), in Umfangsrichtung des Halters betrachtet, jeweils zwischen einer ersten Schneidplattenaufnahme (38) und einer dritten Schneidplattenaufnahme (52) angeordnet sind, und wobei sich die zweiten und dritten Schneidplatten (16, 18) von den ersten Schneidplatten (14) unterscheiden.

2. Fräswerkzeug nach Anspruch 1, wobei die Differenz zwischen dem dritten Winkel $\alpha_3$ und dem zweiten Winkel $\alpha_2$ kleiner als 6° ist.

3. Fräswerkzeug nach Anspruch 1, wobei der dritte Winkel $\alpha_3$ gleich groß ist wie der zweite Winkel $\alpha_2$.

4. Fräswerkzeug nach einem der Ansprüche 1 bis 3, wobei die ersten Schneidplatten (14) jeweils eine erste Hauptschneidkante (44) und eine zweite Hauptschneidkante (46) aufweisen, welche untereinander einen fünften Winkel $\alpha_5$ einschließen, wobei gilt: $\alpha_5 \geq \alpha_4$.

5. Fräswerkzeug nach einem der Ansprüche 1 bis 3, wobei die ersten Schneidplatten (14) jeweils eine erste Hauptschneidkante (44) und eine zweite Hauptschneidkante (46) aufweisen, welche untereinander einen fünften Winkel $\alpha_5$ einschließen, wobei der fünfte Winkel $\alpha_5$ gleich groß ist wie der vierte Winkel $\alpha_4$.

**6.** Fräswerkzeug nach Anspruch 5, wobei die erste Hauptschneidkanten (44) mit der Orthogonalebene einen sechsten Winkel $\alpha_6$ einschließen, welcher gleich groß ist wie der erste Winkel $\alpha_1$, und wobei die zweiten Hauptschneidkanten (46) mit der Orthogonalebene einen siebten Winkel $\alpha_7$ einschließen, welcher gleich groß ist wie der zweite Winkel $\alpha_2$.

**7.** Fräswerkzeug nach einem der Ansprüche 1 bis 6, wobei die zweiten Schneidplatten (16) im Vergleich zu den dritten Schneidplatten (18) geometrisch spiegelverkehrt ausgeführt sind.

**8.** Fräswerkzeug nach einem der Ansprüche 1 bis 7, wobei die ersten und die zweiten Schneidplatten (14, 16) von der Stirnseite (34) des Halterkopfs (24) aus mit dem Halter (12) verschraubt sind, und wobei die dritten Schneidplatten (18) von der Oberseite (28) des Halterkopfs (24) aus mit dem Halter (12) verschraubt sind.

**9.** Fräswerkzeug nach einem der Ansprüche 1 bis 8, wobei die zweiten Schneidplatten (16) jeweils eine dritte Hauptschneidkante (54) aufweisen, welche mit der Orthogonalebene einen achten Winkel $\alpha_8$ einschließt, welcher gleich groß ist wie der zweite Winkel $\alpha_2$, und wobei die dritte Schneidplatten (18) jeweils eine vierte Hauptschneidkante (56) aufweisen, welche mit der Orthogonalebene einen neunten Winkel $\alpha_9$ einschließt, welcher gleich groß ist wie der erste Winkel $\alpha_1$.

**10.** Fräswerkzeug nach den Ansprüchen 5 und 9, wobei der achte Winkel $\alpha_8$ gleich groß ist wie der siebte Winkel $\alpha_7$, und wobei der neunte Winkel $\alpha_9$ gleich groß ist wie der sechste Winkel $\alpha_6$.

**11.** Fräswerkzeug nach einem der Ansprüche 1 bis 10, wobei die ersten Schneidplatten (14) jeweils mit Hilfe (12) einer Schraube am Halter befestigt sind, wobei die Schrauben jeweils in ein Gewinde eingreifen, wobei die Gewinde jeweils orthogonal zu den ersten Anlageflächen (40) in den Halterkopf (12) eingebracht sind.

**12.** Fräswerkzeug nach einem der Ansprüche 1 bis 11, wobei der Halter (12) zumindest teilweise aus Stahl und die ersten Schneidplatten (14) zumindest teilweise aus Hartmetall sind.

**13.** Fräswerkzeug nach einem der Ansprüche 1 bis 12, wobei das Fräswerkzeug (10) zur Herstellung einer Zyklo-Palloid-Verzahnung geeignet ist.

**Claims**

**1.** A milling tool (10) for machining a workpiece, having:

- a holder (12) which is rotated about a center axis (26) when the milling tool is used, wherein the holder (12) comprises in a region of its rear end a clamping portion (20) for clamping the holder (12) and comprises in a region of its rear end a holder head (24) which projects out radially compared to the clamping portion (20) and on which multiple first cutting plate receptacles (38), which are arranged distributed in a circumferential direction, are provided, and
- multiple first cutting plates (14), which are fastened in the first cutting plate receptacles (38) provided on the holder (12) and which project radially outward beyond the holder head (24) at least in regions, wherein radially outermost points of the first cutting plates (14) lie on a common circle, the center point of which lies on the center axis (26) of the holder (12),

wherein multiple first partly conical surfaces (30), which lie on a common, imaginary first envelope cone, the imaginary tip of which lies on the center axis (26) of the holder (12) and the surface line of which encloses a first angle $\alpha_1$ with an orthogonal plane aligned orthogonally to the center axis of the holder, are provided on a top side (28) of the holder head (24) facing the clamping portion (20), wherein multiple second partly conical surfaces (36), which lie on a common, imaginary second envelope cone, the imaginary tip of which lies on the center axis (26) of the holder (12) and the surface line of which encloses a second angle $\alpha_2$ with the orthogonal plane, are provided on an end side (34) of the holder head which is remote from the clamping portion (20) and is arranged opposite the top side (28), wherein each of the first cutting plate receptacles (38) has a first bearing surface (40) for the abutment of the first cutting plates (14) against the holder (12), wherein the first bearing surfaces (40) are arranged between the top side (28) and the end side (34) of the holder head (24) and enclose a third angle $\alpha_3$ with the orthogonal plane, wherein the surface line of the first envelope cone encloses a fourth angle $\alpha_4$ with the surface line of the second envelope cone, and wherein the following applies: (i) $\alpha_1 > \alpha_3 \geq \alpha_2$ and (ii) $\alpha_4 \leq \alpha_1$, **characterized in that** multiple second and third cutting plate receptacles (50, 52), which are arranged distributed in the circumferential direction, are further provided on the holder (12), wherein a second cutting plate (16) is fastened in each of the second cutting plate receptacles (50), and a third cutting plate (18) is fastened in each of the third cutting plate receptacles (52), wherein the second cutting plate receptacles (50), when viewed in the circumferential direction of the holder, are each arranged between a first cutting plate receptacles (38) and a third cutting plate receptacles (52), and wherein the second and third cutting plates (16, 18) differ from the first cutting plates (14).

2. The milling tool as claimed in claim 1, wherein the difference between the third angle $\alpha_3$ and the second angle $\alpha_2$ is less than 6°.

3. The milling tool as claimed in claim 1, wherein the third angle $\alpha_3$ is of same size as the second angle $\alpha_2$.

4. The milling tool as claimed in one of claims 1 to 3, wherein each of the first cutting plates (14) comprises a first main cutting edge (44) and a second main cutting edge (46), which enclose a fifth angle $\alpha_5$ between each other, wherein the following applies:

$$\alpha_5 \geq \alpha_4.$$

5. The milling tool as claimed in one of claims 1 to 3, wherein each of the first cutting plates (14) comprises a first main cutting edge (44) and a second main cutting edge (46), which enclose a fifth angle $\alpha_5$ between each other, wherein the fifth angle $\alpha_5$ is of same size as the fourth angle $\alpha_4$.

6. The milling tool as claimed in claim 5, wherein the first main cutting edges (44) enclose a sixth angle $\alpha_6$ with the orthogonal plane which is of same size as the first angle $\alpha_1$, and wherein the second main cutting edges (46) enclose a seventh angle $\alpha_7$ with the orthogonal plane which is of same size as the second angle $\alpha_2$.

7. The milling tool as claimed in one of claims 1 to 6, wherein the second cutting plates (16) are realized geometrically mirror-inverted compared to the third cutting plates (18).

8. The milling tool as claimed in one of claims 1 to 7, wherein the first and the second cutting plates (14, 16) are screw-connected to the holder (12) from the end side (34) of the holder head (24), and wherein the third cutting plates (18) are screw-connected to the holder (12) from the top side (28) of the holder head (24).

9. The milling tool as claimed in one of claims 1 to 8, wherein each of the second cutting plates (16) comprises a third main cutting edge (54) which encloses an eighth angle $\alpha_8$ with the orthogonal plane which is of same size as the second angle $\alpha_2$, and wherein each of the third cutting plates (18) comprises a fourth main cutting edge (56) which encloses a ninth angle $\alpha_9$ with the orthogonal plane which is of same size as the first angle $\alpha_1$.

10. The milling tool as claimed in claims 5 and 9, wherein the eighth angle $\alpha_8$ is of same size as the seventh angle $\alpha_7$, and wherein the ninth angle $\alpha_9$ is of same size as the sixth angle $\alpha_6$.

11. The milling tool as claimed in one of claims 1 to 10, wherein each of the first cutting plates (14) are fastened to the holder by means (12) of a screw, wherein each of the screws engages in a thread, wherein the threads are each provided in the holder head (12) orthogonally to the first bearing surfaces (40).

12. The milling tool as claimed in one of claims 1 to 11, wherein the holder (12) is produced at least in part from steel and the first cutting plates (14) are produced at least in part from hard metal.

13. The milling tool as claimed in one of claims 1 to 12, wherein the milling tool (10) is suitable for producing a cyclo-palloid toothing.

**Revendications**

1. Outil de fraisage (10) pour l'usinage par enlèvement de copeaux d'une pièce, avec:

- un support (12), qui lors d'une utilisation de l'outil de fraisage tourne autour d'un axe central (26), dans lequel le support (12) présente dans la région de son extrémité arrière une partie de serrage (20) pour le serrage du support (12) et présente dans la région de son extrémité avant une tête de support (24) saillante radialement par rapport à l'extrémité de serrage (20), sur laquelle il est prévu plusieurs premiers logements de plaquettes de coupe (38) disposés de façon répartie en direction périphérique, et
- plusieurs premières plaquettes de coupe (14), qui sont fixées dans les premiers logements de plaquettes de coupe (38) prévus sur le support (12), et qui font au moins localement saillie radialement vers l'extérieur sur la tête de support (24), dans lequel les points respectivement les plus extérieurs radialement des premières plaquettes de coupe (14) sont situés sur un cercle commun, dont le point central est situé sur l'axe central (26) du support (12),

dans lequel il est prévu sur un côté supérieur (28) de la tête de support (24) tourné vers la partie de serrage (20) plusieurs premières faces coniques partielles (30), qui sont situées sur un premier cône enveloppe imaginaire commun, dont le sommet imaginaire est situé sur l'axe central (26) du support (12) et dont la génératrice forme un premier angle $\alpha_1$ avec un plan orthogonal orienté orthogonalement à l'axe central du support,

dans lequel il est prévu sur un côté frontal (34) de la tête de support, situé à l'opposé de la partie de serrage (20) et situé à l'opposé du côté supérieur (28), plusieurs deuxièmes faces coniques partielles (36), qui sont situées sur un deuxième cône enveloppe imaginaire commun, dont le sommet imaginaire est situé sur l'axe central (26) du support (12) et dont la génératrice forme un deuxième angle $\alpha_2$ avec le plan orthogonal,

dans lequel les premiers logements de plaquettes de coupe (38) comportent chacun une première face d'appui (40) pour l'appui des premières plaquettes de coupe (14) sur le support (12), dans lequel les premières faces d'appui (40) sont disposées entre le côté supérieur (28) et le côté frontal (34) de la tête de support (24) et forment un troisième angle $\alpha_3$ avec le plan orthogonal,

dans lequel la génératrice du premier cône enveloppe forme avec la génératrice du deuxième cône enveloppe un quatrième angle $\alpha_4$, et

dans lequel on a: (i) $\alpha_1 > \alpha_3 \geq \alpha_2$ et (ii) $\alpha_4 \leq \alpha_1$, **caractérisé en ce qu'**il est en outre prévu sur le support (12) plusieurs deuxièmes et troisièmes logements de plaquettes de coupe (50, 52) disposés de façon répartie en direction périphérique, dans lequel une deuxième plaquette de coupe (16) est respectivement fixée dans les deuxièmes logements de plaquettes de coupe (50) et une troisième plaquette de coupe (18) est respectivement fixée dans les troisièmes logements de plaquettes de coupe (52), dans lequel les deuxièmes logements de plaquettes de coupe (50), considérés dans la direction périphérique du support, sont respectivement disposés entre un premier logement de plaquette de coupe (38) et un troisième logement de plaquette de coupe (52), et dans lequel les deuxièmes et troisièmes plaquettes de coupe (16, 18) diffèrent des premières plaquettes de coupe (14).

2. Outil de fraisage selon la revendication 1, dans lequel la différence entre le troisième angle $\alpha_3$ et le deuxième angle $\alpha_2$ est inférieure à 6°.

3. Outil de fraisage selon la revendication 1, dans lequel le troisième angle $\alpha_3$ est supérieur ou égal au deuxième angle $\alpha_2$.

4. Outil de fraisage selon l'une quelconque des revendications 1 à 3, dans lequel les premières plaquettes de coupe (14) présentent respectivement une première arête de coupe principale (44) et une deuxième arête de coupe principale (46), qui forment entre elles un cinquième angle $\alpha_5$, pour lequel on a: $\alpha_5 \geq \alpha_4$.

5. Outil de fraisage selon l'une quelconque des revendications 1 à 3, dans lequel les premières plaquettes de coupe (14) présentent respectivement une première arête de coupe principale (44) et une deuxième arête de coupe principale (46), qui forment entre elles un cinquième angle $\alpha_5$, dans lequel le cinquième angle $\alpha_5$ est supérieur ou égal au quatrième angle $\alpha_4$.

6. Outil de fraisage selon la revendication 5, dans lequel les premières arêtes de coupe principales (44) forment avec le plan orthogonal un sixième angle $\alpha_6$, qui est supérieur ou égal au premier angle $\alpha_1$, et dans lequel les deuxièmes arêtes de coupe principales (46) forment avec le plan orthogonal un septième angle $\alpha_7$, qui est supérieur ou égal au deuxième angle $\alpha_2$.

7. Outil de fraisage selon l'une quelconque des revendications 1 à 6, dans lequel les deuxièmes plaquettes de coupe (16) sont réalisées de façon géométriquement inversée par rapport aux troisièmes plaquettes de coupe (18).

8. Outil de fraisage selon l'une quelconque des revendications 1 à 7, dans lequel les premières et les deuxièmes plaquettes de coupe (14, 16) sont vissées sur le support (12) à partir du côté frontal (34) de la tête de support (24), et dans lequel les troisièmes plaquettes de coupe (18) sont vissées sur le support (12) à partir du côté supérieur (28) de la tête de support (24).

9. Outil de fraisage selon l'une quelconque des revendications 1 à 8, dans lequel les deuxièmes plaquettes de coupe (16) présentent chacune une troisième arête de coupe principale (54), qui forme avec le plan orthogonal un huitième angle $\alpha_8$, qui est supérieur ou égal au deuxième angle $\alpha_2$, et dans lequel les troisièmes plaquettes de coupe (18) présentent chacune une quatrième arête de coupe principale (56), qui forme avec le plan orthogonal un neuvième angle $\alpha_9$, qui est supérieur ou égal au premier angle $\alpha_1$.

10. Outil de fraisage selon les revendications 5 et 9, dans lequel le huitième angle $\alpha_8$ est supérieur ou égal au septième angle $\alpha_7$, et dans lequel le neuvième angle $\alpha_9$ est supérieur ou égal au sixième angle $\alpha_6$.

11. Outil de fraisage selon l'une quelconque des revendications 1 à 10, dans lequel les premières plaquettes de coupe (14) sont fixées respectivement à l'aide d'une vis au support (12), dans lequel les vis s'engagent respectivement dans un filet, dans lequel les filets sont chaque fois pratiqués dans la tête de support (12) orthogonalement aux premières faces d'appui (40).

12. Outil de fraisage selon l'une quelconque des revendications 1 à 11, dans lequel le support (12) est au moins en partie constitué d'acier et les premières plaquettes de coupe (14) sont au moins en partie constituées de métal dur.

13. Outil de fraisage selon l'une quelconque des revendications 1 à 12, dans lequel l'outil de fraisage (10) convient pour la production d'une denture cyclopalloïde.

**Fig. 1**

**Fig. 2**

**Fig. 3**

Fig. 4

Fig. 5

EP 3 237 134 B1

**Fig. 6**

14

46

48

44

**Fig. 7a**

14

**Fig. 7b**

14

46

48

$\alpha_5$

44

**Fig. 7c**

16

54

54

54

**Fig. 8b**

16

54

54

**Fig. 8a**

18

56

56

56

**Fig. 9b**

18

56

56

**Fig. 9a**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 201503499 A1

- DE 102012108752 B3